# EUROPEAN PATENT APPLICATION

(11) **EP 3 709 127 A1**
(43) Date of publication of application: **16.09.2020**
(21) Application number: 18837795.6
(22) Date of filing: 19.01.2018

(54) **NOVEL OLAP PRECOMPUTATION MODEL AND PRECOMPUTATION RESULT GENERATION METHOD**

(30) Priority: 11.01.2018 CN 201810025700
(71) Applicant: Shanghai Kyligence Information Technology Co., Ltd, Shanghai 201203 (CN)
(72) Inventor: SHI, Jicheng, Shanghai 201203 (CN); LI, Yang, Shanghai 201203 (CN); HAN, Qing, Shanghai 201203 (CN)
(74) Representative: Sun, Yiming
(86) International application number: PCT/CN2018/073318
(87) International publication number: WO 2019/019573

(57) **Abstract**

The OLAP pre-calculation model and a method for generating pre-calculation result includes a query statement statistical analyzer, a pre-calculation result generator, and a pre-calculation result usage monitor. The method includes: performing statistical analysis on the query statement; judging whether a matching pre-calculation dimension combination exists according to the statistical analysis result ; generating a matching pre-calculation dimension combination if no matching pre-calculation dimension combination exists; and obtaining a desired query result according to the matching pre-calculation dimension combination, or querying for a result directly from source data if there are no matching combined dimensions. An optimal dimension combination is obtained by analyzing the query statement, and a pre-calculation result corresponding to the dimension combination is generated dynamically, to improve query efficiency of subsequent queries. As the number of queries is increased, the pre-calculation result will meet the query demand more closely, and the query efficiency will be higher.

## Description

### FIELD OF THE INVENTION

The present invention belongs to the OLAP pre-calculation information field, and particularly relates to a novel OLAP pre-calculation model and a method for generating a pre-calculation result.

### BACKGROUND OF THE INVENTION

In the Internet era with data explosion, the scale of data collection becomes larger and larger, and the classification of collected data become finer and finer. How to effectively utilize the data, discover the potential rules in the data, and ultimately provide forward-looking guidance has become a problem to be solved urgently.

The data collection in the age of big data has a characteristic that the data is only collected incrementally but not modified, i.e., often no correction is made to the history data; rather, only now data is added continuously. However, the online transact processing (OLTP) technique used for conventional data warehouses is not suitable for the scenarios, especially in a case of enormous data volume. The primary cause is that OLTP is designed to deal with complex application scenarios, including data additions, deletions, modifications, queries, and transactions. To implement those complex functions, a trade-off has been made in OLTP in terms of query performance, especially in scenarios of queries in massive data.

Compared with OLTP, OLAP is more suitable for use in modern big data application scenarios. OLAP provides a solution that is based on pre-calculation to improve efficiency of multi-dimensional analysis, i.e., pre-aggregation is performed for the data in a data warehouse in different dimension combinations by implementing a "data cube", and the result is saved; when an analyst performs an actual business query, it is unnecessary to perform aggregation operation for the data; instead, the pre-calculation result is read directly, making it possible to perform analysis of data at a scale of millions or even hundreds of millions of data items. Some technical applications that utilize a large-scale computer cluster to perform multi-dimensional pre-calculation of large datasets have emerged at the right moment. Those techniques often convert business query semantics into data retrieval in data cubes, and thereby obtain higher performance than querying in raw data.

However, actual application scenarios are often complex and involve a large number of dimensions. A large quantity of computing resources and storage spaces will be consumed if data cubes of all dimension combinations are calculated and stored in advance. Owing to the fact that the quantity of dimension combinations will be increased exponentially as the quantity of dimensions is increased, in some extremely complex application scenarios, it is an impossible to pre-calculate all data cubes. Furthermore, in conventional OLAP data cubes, only one fixed result (i.e., a pre-calculation result in a specific dimension sequence) will be obtained through pre-calculation of the combinations in each dimension. However, actual query scenarios are varying, and the dimension sequence has a significant influence on the query efficiency. Therefore, a single dimension sequence can't meet the demand.

### BRIEF SUMMARY OF THE INVENTION

The technical problem to be solved in the present invention is: The existing pre-calculation model can't adapt to varying query scenarios of the user because it can only perform pre-calculation on the basis of one dimension combination.

To solve the technical problem described above, the present invention provides a novel OLAP pre-calculation model, which comprises: a query statement statistical analyzer, a dynamic dimension combination generator, and a pre-calculation result usage monitor; wherein,
the query statement statistical analyzer is configured to receive an query statement input and perform statistical analysis on the query statement; and judge whether a pre-calculation dimension combination matching the query statement exists among pre-stored pre-calculation dimension combinations according to the statistical analysis result;
the dynamic dimension combination generator is configured to generate an optimal dimension combination corresponding to the query statement and an optimal combination sequence corresponding to the optimal dimension combination, generate a pre-calculation dimension combination matching the query statement according to the optimal dimension combination and the optimal combination sequence, and store the matching pre-calculation dimension combination, if no matching pre-calculation dimension combination exists;
the query statement statistical analyzer is further configured to perform a pre-calculation query according to the matching pre-calculation dimension combination to obtain a desired query result; and
the pre-calculation result usage monitor is configured to monitor all pre-calculation dimension combinations generated by the dynamic dimension combination generator, ascertain the frequency of use of a pre-calculation result corresponding to each pre-calculation dimension combination within a preset time period, and, if the frequency of use of the pre-calculation result is lower than a preset threshold, delete the pre-calculation result corresponding to the pre-calculation dimension combination.

The present invention has the following beneficial effects: With the model described above, the user's query statements are collected continuously, desired optimal dimension combinations are analyzed for the statements, and pre-calculation results of corresponding dimension combinations are generated dynamically, to improve query efficiency of subsequent queries that are the same as or similar to previous queries. As the quantity of user queries is increased, the pre-calculation result will meet the query demand more and more closely, and the query efficiency will be higher and higher. Thus, a problem that the OLAP pre-calculation occupies computation and storage resources excessively can be solved, an optimal sequence of the generated dimension combinations can be arranged, the query efficiency can be improved, and varying user query scenarios can be handled better.

Furthermore, the query statement statistical analyzer is further configured to select a second optimal pre-calculation dimension combination among the pre-stored pre-calculation dimension combinations, if no pre-calculation dimension combination matching the query statement exists among the pre-stored pre-calculation dimension combinations;
performing a pre-calculation query to obtain a second optimal query result according to the second optimal pre-calculation dimension combination; and
performing aggregation operation of the second optimal query result to obtain the desired query result.

Furthermore, the query statement statistical analyzer is specifically configured to receive a query statement input, and perform statistical analysis on data tables, dimensions, measurements, and filter conditions used in the query statement.

Furthermore, the query statement statistical analyzer is further configured to read data corresponding to the query statement directly from the source data, if neither a matching pre-calculation dimension combination nor a second optimal pre-calculation dimension combination exists in the query statement statistical analyzer; and
performing aggregation calculation and filtering of the data read from the source data to obtain the desired query result.

The present invention further relates to a novel method for generating a pre-calculation result utilizing the OLAP pre-calculation model described above, which comprises:
receiving a query statement input, and performing statistical analysis on the query statement;
judging whether a pre-calculation dimension combination matching the query statement exists among pre-stored pre-calculation dimension combinations;

generating an optimal dimension combination corresponding to the query statement and an optimal combination sequence corresponding to the optimal dimension combination, generating a pre-calculation dimension combination matching the query statement according to the optimal dimension combination and the optimal combination sequence, and storing the matching pre-calculation dimension combination, if no matching pre-calculation dimension combination exists;
performing a pre-calculation query to obtain a desired query result according to the matching pre-calculation dimension combination; and
monitoring all generated pre-calculation dimension combinations, ascertaining the frequency of use of a pre-calculation result corresponding to each pre-calculation dimension combination within a preset time period, and, if the frequency of use is lower than a preset threshold, deleting the pre-calculation result corresponding to the pre-calculation dimension combination.

The present invention has the following beneficial effects: With the method described above, the user's query statements are collected continuously, desired optimal dimension combinations are analyzed for the statements, and pre-calculation results of corresponding dimension combinations are generated dynamically, to improve query efficiency of subsequent queries that are the same as or similar to previous queries. As the quantity of user queries is increased, the pre-calculation result will meet the query demand more and more closely, and the query efficiency will be higher and higher. Thus, a problem that the OLAP pre-calculation occupies computation and storage resources excessively can be solved, an optimal sequence of the generated dimension combinations can be arranged, the query efficiency can be improved, and varying user query scenarios can be handled better.

Furthermore, the step of judging whether a pre-calculation dimension combination matching the query statement exists among pre-stored pre-calculation dimension combinations further comprises:
selecting a second optimal pre-calculation dimension combination among the pre-stored pre-calculation dimension combinations, if no pre-calculation dimension combination matching the query statement exists among the pre-stored pre-calculation dimension combinations;
performing a pre-calculation query to obtain a second optimal query result according to the second optimal pre-calculation dimension combination; and
performing aggregation operation of the second optimal query result to obtain the desired query result.

Furthermore, the step of receiving a query statement input and performing statistical analysis on the query statement comprises:
receiving the query statement input, and performing statistical analysis on data tables, dimensions, measurements, and filter conditions used in the query statement.

Furthermore, the step of judging whether a pre-calculation dimension combination matching the query statement exists among pre-stored pre-calculation dimension combinations further comprises:
reading data corresponding to the query statement directly from the source data, if neither a pre-calculation dimension combination matching the query statement nor a second optimal pre-calculation dimension combination exists among the pre-stored pre-calculation dimension combinations; and
performing aggregation calculation and filtering of the data read from the source data to obtain the desired query result.

### BRIEF DESCRIPTION OF THE DRAWINGS

Fig. 1 is a schematic view of a structural diagram of the novel OLAP pre-calculation model provided in the present invention.
Fig. 2 is a flow chart of the novel method for generating a pre-calculation result provided in the present invention.

### DETAILED DESCRIPTION OF THE INVENTION

Hereunder the principle and features of the present invention will be detailed with reference to the accompanying drawings. However, it should be noted that the embodiments are provided only to interpret the present invention but don't constitute any limitation to the scope of the present invention.

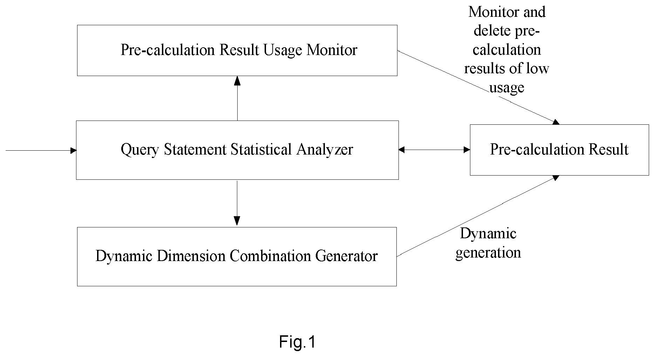

As shown in Fig. 1, a novel OLAP pre-calculation model is provided in embodiment 1 of the present invention, comprising: a query statement statistical analyzer, a dynamic dimension combination generator, and a pre-calculation result usage monitor; wherein,
the query statement statistical analyzer is configured to receive an query statement input and perform statistical analysis on the query statement; and judge whether a pre-calculation dimension combination matching the query statement exists among pre-stored pre-calculation dimension combinations according to the statistical analysis result;
the dynamic dimension combination generator is configured to generate an optimal dimension combination corresponding to the query statement and an optimal combination sequence corresponding to the optimal dimension combination, generate a pre-calculation dimension combination matching the query statement according to the optimal dimension combination and the optimal combination sequence, and store the matching pre-calculation dimension combination, if no matching pre-calculation dimension combination exists;
the query statement statistical analyzer is further configured to perform a pre-calculation query according to the matching pre-calculation dimension combination to obtain a desired query result; and
the pre-calculation result usage monitor is configured to monitor all pre-calculation dimension combinations generated by the dynamic dimension combination generator, ascertain the frequency of use of a pre-calculation result corresponding to each pre-calculation dimension combination within a preset time period, and, if the frequency of use of the pre-calculation result is lower than a preset threshold, delete the pre-calculation result corresponding to the pre-calculation dimension combination.

It should be noted: in the embodiment 1, the user's query statements are collected continuously, statistical analysis is performed for those query statements to judge whether a pre-calculation dimension combination matching the present query statement exists among pre-stored pre-calculation dimension combinations; if such a pre-calculation dimension combination doesn't exist among the previous pre-calculation results, it indicates that a matching pre-calculation dimension combination doesn't exist. For example, in a query statement "SELECT SUM (PRICE), YEAR FROM SALES_TABLE WHERE LOCATION = 'Shanghai' GROUP BY YEAR", YEAR and LOCATION are required dimensions, and a combination that only includes the two dimensions is an optimal combination, wherein, YEAR is a column in GROUP BY, LOCATION is a column in the filter condition WHERE; in general, the query dimensions are extracted from the two places and are analyzed.

If there is no matching pre-calculation dimension combination, an optimal dimension combination corresponding to the query statement and an optimal combination sequence corresponding to the optimal dimension combination are generated, and then a pre-calculation dimension combination matching the query statement is generated according to the optimal dimension combination and the optimal combination sequence, and the matching pre-calculation dimension combination is stored. Next, the query statement statistical analyzer performs a pre-calculation query to obtain a desired query result according to the matching pre-calculation dimension combination, and saves the desired query result. For instance, a query statement "SELECT SUM (PRICE), YEAR FROM SALES_TABLE WHERE LOCATION = 'Shanghai' GROUP BY YEAR" may be used as an example. It can be seen from the above analysis: the columns YEAR and LOCATION are required dimensions, and the optimal dimension combination is a combination that only includes the two columns, while second optimal combination may be a combination that includes the column YEAR, a combination that includes the column LOCATION, or a combination that includes the column PRICE. In addition, if no pre-calculation result that meets the demand is obtained through the process described above, a desired result should be read from the source data. For instance, in the above example, the data in three columns PRICE, YEAR, and LOCATION should be read from the source data, and then aggregation calculation and filtering should be carried out to obtain a final result. Such a query statement is sent to the "dynamic dimension combination generator" to generate a pre-calculation result, so as to speed up the handling of the same or similar query statements; moreover, the pre-calculation result usage monitor is used in view that the user's queries are varying. For example, the queries of concern in this month may be different from those in the last month. Therefore, the pre-calculation results generated previously may lose effectiveness after a period, i.e., they are no longer accessed by the user. The monitor obtains relevant information from a query mode statistical analyzer, ascertain pre-calculation results that are not accessed for a long time, and remove those pre-calculation results or move them to another storage device, to make more storage space available and alleviate storage pressure.

In embodiment 2, the query statement statistical analyzer is further configured to select a second optimal pre-calculation dimension combination among the pre-stored pre-calculation dimension combinations, if no pre-calculation dimension combination matching the query statement exists among the pre-stored pre-calculation dimension combinations;
performing a pre-calculation query to obtain a second optimal query result according to the second optimal pre-calculation dimension combination; and
performing aggregation operation of the second optimal query result to obtain the desired query result.

It can be understood: in the embodiment 2, for instance, a query statement "SELECT SUM (PRICE), YEAR FROM SALES_TABLE WHERE LOCATION = 'Shanghai' GROUP BY YEAR" may be used as an example. It is seen from the above analysis: the columns YEAR and LOCATION are required dimensions, and the optimal dimension combination is a combination that only includes the two columns. If there is a dimension combination that includes YEAR and LOCATION but is not limited to the combinations of the two dimensions (e.g., dimension combination YEAR, LOCATION, and CATEGORY), such a dimension combination is a usable dimension combination for the query. The pre-calculation result still can be used to speed up the query, but some simple processing must be carried out for the pre-calculation result, such as on-line aggregation operation, so as to obtain a desired query result, for example, as shown in Table 1. The dynamic dimension combination generator receives dimension combinations to be generated dynamically from the query statement statistical analyzer, and then the dynamic dimension combination generator generates a new pre-calculation result of dimension combination that meets the query demand on the basis of the previous pre-calculation results or source data. Here, it should be noted that the dynamic dimension combination generator not only has to select required dimensions, but also has to consider the dimension sequence, i.e., the storage arrangement of the final pre-calculation results.

For example, suppose the required dimensions are A, B and C, and C is used as the query criterion for the query, it will be favorable for the query to place C in the first position in the sequence, i.e.., the generated dimension sequence is CAB. Reflected in storage, the result similar to that shown in Table 1 will be exhibited ultimately:

**(Table 1)**

| Dimensio n C | Dimensio n A | Dimensio n B |
|---|---|---|
| 1 | 100 | 7 |
| 1 | 200 | 5 |
| 4 | 50 | 10 |
| 7 | 90 | 8 |
| 9 | 80 | 3 |
| 9 | 80 | 4 |
| 10 | 10 | 4 |

As shown in Table 1, with the dimension combination sequence taken into consideration, the filter condition for dimension C will be more efficient, the read data will be more concentrated, and the efficiency will be higher.

In embodiment 3, the query statement statistical analyzer is specifically configured to receive a query statement input, and perform statistical analysis on data tables, dimensions, measurements, and filter conditions used in the query statement.

It can be understood: in the embodiment 3, the query statement statistical analyzer collects each query statement from the user, and analyzes and performs statistics on the following information:
1) data tables used in the query; 2) dimensions and other information used in the query; 3) measurements and other information used in the query; 4) filter conditions used in the query; 5) frequency of occurrence and probability of the same query; 6) desired optimal dimension combination (including sequence information); 7) other possible information.

In embodiment 4, if neither a matching pre-calculation dimension combination nor a second optimal pre-calculation dimension combination exists in the query statement statistical analyzer, the query statement statistical analyzer is further configured to:
reading data corresponding to the query statement directly from the source data;
performing aggregation calculation and filtering of the data read from the source data to obtain the desired query result.

It can be understood: in the embodiment 4, for instance, a query statement "SELECT SUM (PRICE), YEAR FROM SALES_TABLE WHERE LOCATION = 'Shanghai' GROUP BY YEAR" may be used as an example. It is seen from the above analysis: the columns YEAR and LOCATION are required dimensions, and the optimal dimension combination is a combination that only includes the two columns. However, if no pre-calculation result that meets the demand is obtained through the process described above, a desired result should be read from the source data. For instance, in the above example, the data in three columns PRICE, YEAR, and LOCATION should be reading from the source data, and then aggregation calculation and filtering should be carried out to obtain a final result. Such a query statement will be sent to the "dynamic dimension combination generator" to generate a pre-calculation result and thereby speed up the execution of the same or similar query statements.

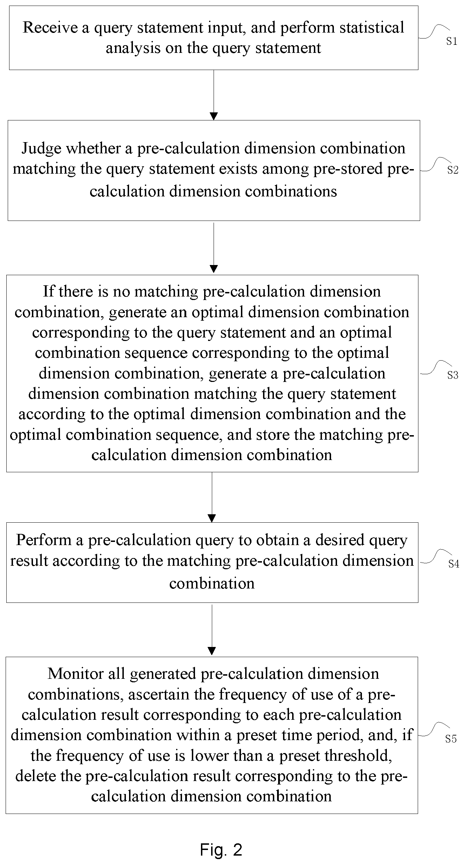

As shown in Fig. 2, in embodiment 5 of the present invention, a novel method for generating a pre-calculation result utilizing the OLAP pre-calculation model described in the embodiments 1-4 is provided, comprising:
S1. receiving a query statement input, and performing statistical analysis on the query statement;
S2. judging whether a pre-calculation dimension combination matching the query statement exists among pre-stored pre-calculation dimension combinations;
S3. generating an optimal dimension combination corresponding to the query statement and an optimal combination sequence corresponding to the optimal dimension combination, generating a pre-calculation dimension combination matching the query statement according to the optimal dimension combination and the optimal combination sequence, and storing the matching pre-calculation dimension combination, if no matching pre-calculation dimension combination exists;
S4. performing a pre-calculation query to obtain a desired query result according to the matching pre-calculation dimension combination; and
S5. monitoring all pre-calculation dimension combinations generated by the dynamic dimension combination generator, ascertaining the frequency of use of a pre-calculation result corresponding to each pre-calculation dimension combination within a preset time period, and, if the frequency of use of the pre-calculation result is lower than a preset threshold, deleting the pre-calculation result corresponding to the pre-calculation dimension combination.

It can be understood: in the embodiment 5, the user's query statements are collected continuously, statistical analysis is performed for those query statements to judge whether a pre-calculation dimension combination matching the present query statement exists among pre-stored pre-calculation dimension combinations; if such a pre-calculation dimension combination doesn't exist among the previous pre-calculation results, it indicates that a matching pre-calculation dimension combination doesn't exist. For example, in a query statement "SELECT SUM (PRICE), YEAR FROM SALES_TABLE WHERE LOCATION = 'Shanghai' GROUP BY YEAR", YEAR and LOCATION are required dimensions, a combination that only includes the two dimensions is an optimal combination, and second optimal combinations may be a combination that includes column YEAR, a combination that includes column LOCATION, and a combination that includes PRICE, wherein, YEAR is a column in GROUP BY, LOCATION is a column in the filter condition WHERE; in general, the query dimensions are extracted from the two places and are analyzed.

If there is no matching pre-calculation dimension combination, an optimal dimension combination corresponding to the query statement and an optimal combination sequence corresponding to the optimal dimension combination are generated, and then a pre-calculation dimension combination matching the query statement is generated according to the optimal dimension combination and the optimal combination sequence, and the matching pre-calculation dimension combination is stored. Next, the query statement statistical analyzer performs a pre-calculation query to obtain a desired query result according to the matching pre-calculation dimension combination, and saves the desired query result. For instance, a query statement "SELECT SUM (PRICE), YEAR FROM SALES_TABLE WHERE LOCATION = 'Shanghai' GROUP BY YEAR" may be used as an example. It is seen from the above analysis: the columns YEAR and LOCATION are required dimensions, and the optimal dimension combination is a combination that only includes the two columns. In addition, if no pre-calculation result that meets the demand is obtained through the process described above, a desired result should be read from the source data. For instance, in the above example, the data in three columns PRICE, YEAR, and LOCATION should be read from the source data, and then aggregation calculation and filtering should be carried out to obtain a final result. Such a query statement is sent to the "dynamic dimension combination generator" to generate a pre-calculation result, so as to speed up the handling of the same or similar query statements; moreover, the pre-calculation result usage monitor is used in view that the user's queries are varying. For example, the queries of concern in this month may be different from those in the last month. Therefore, the pre-calculation results generated previously may lose effectiveness after a period, i.e., they are no longer accessed by the user. The monitor obtains relevant information from a query mode statistical analyzer, ascertain pre-calculation results that are not accessed for a long time, and remove those pre-calculation results or move them to another storage device, to make more storage space available and alleviate storage pressure.

In embodiment 6, the step of judging whether a pre-calculation dimension combination matching the query statement exists among pre-stored pre-calculation dimension combinations further comprises:
selecting a second optimal pre-calculation dimension combination among the pre-stored pre-calculation dimension combinations, if no pre-calculation dimension combination matching the query statement exists among the pre-stored pre-calculation dimension combinations;
performing a pre-calculation query to obtain a second optimal query result according to the second optimal pre-calculation dimension combination; and
performing aggregation operation of the second optimal query result to obtain the desired query result.

It can be understood: in the embodiment 6, for instance, a query statement "SELECT SUM (PRICE), YEAR FROM SALES_TABLE WHERE LOCATION = 'Shanghai' GROUP BY YEAR" may be used as an example. It is seen from the above analysis: the columns YEAR and LOCATION are required dimensions, and the optimal dimension combination is a combination that only includes the two columns. If there is a dimension combination that includes YEAR and LOCATION but is not limited to the combinations of the two dimensions (e.g., dimension combination YEAR, LOCATION, and CATEGORY), such a dimension combination is a usable dimension combination for the query. The pre-calculation result still can be used to speed up the query, but some simple processing must be carried out for the pre-calculation result, such as on-line aggregation operation, so as to obtain a desired query result, for example, as shown in Table 1. The dynamic dimension combination generator receives dimension combinations to be generated dynamically from the query statement statistical analyzer, and then the dynamic dimension combination generator generates a new pre-calculation result of dimension combination that meets the query demand on the basis of the previous pre-calculation results or source data. Here, it should be noted that the dynamic dimension combination generator not only has to select required dimensions, but also has to consider the dimension sequence, i.e., the storage arrangement of the final pre-calculation results.

For example, suppose the required dimensions are A, B and C, and C is used as the query criterion for the query, it will be favorable for the query to place C in the first position in the sequence, i.e.., the generated dimension sequence is CAB. Reflected in storage, the result similar to that shown in Table 1 will be exhibited ultimately:

**(Table 1)**

| Dimension C | Dimension A | Dimension B |
|---|---|---|
| 1 | 100 | 7 |
| 1 | 200 | 5 |
| 4 | 50 | 10 |
| 7 | 90 | 8 |
| 9 | 80 | 3 |
| 9 | 80 | 4 |
| 10 | 10 | 4 |

As shown in Table 1, with the dimension combination sequence taken into consideration, the filter condition for dimension C will be more efficient, the read data will be more concentrated, and the efficiency will be higher.

In embodiment 7, the step of receiving a query statement input and performing statistical analysis on the query statement comprises:
receiving the query statement input, and performing statistical analysis on data tables, dimensions, measurements, and filter conditions used in the query statement.

In embodiment 8, the step of judging whether a pre-calculation dimension combination matching the query statement exists among pre-stored pre-calculation dimension combinations further comprises:
reading data corresponding to the query statement directly from the source data, if neither a pre-calculation dimension combination matching the query statement nor a second optimal pre-calculation dimension combination exists among the pre-stored pre-calculation dimension combinations; and
performing aggregation calculation and filtering of the data read from the source data to obtain the desired query result.

It can be understood: in the embodiment 8, for instance, a query statement "SELECT SUM (PRICE), YEAR FROM SALES_TABLE WHERE LOCATION = 'Shanghai' GROUP BY YEAR" may be used as an example. It is seen from the above analysis: the columns YEAR and LOCATION are required dimensions, and the optimal dimension combination is a combination that only includes the two columns. However, if no pre-calculation result that meets the demand is obtained through the process described above, a desired result should be read from the source data. For instance, in the above example, the data in three columns PRICE, YEAR, and LOCATION should be read from the source data, and then aggregation calculation and filtering should be carried out to obtain a final result. Such a query statement will be sent to the "dynamic dimension combination generator" to generate a pre-calculation result and thereby speed up the execution of the same or similar query statements.

In this document, the exemplary expression of the above terms may not necessarily refer to the same embodiment or example. Moreover, the specific features, structures, materials, or characteristics described can be combined appropriately in any one or more embodiments or examples. Furthermore, those skilled in the art may combine or assemble different embodiments or examples and features in different embodiments or examples described herein, provided that there is no contradiction between them.

While the present invention is described above in some preferred embodiments, the present invention is not limited to those preferred embodiments. Any modification, equivalent replacement, and improvement made without departing from the spirit and principle of the present invention shall be deemed as falling into the scope of protection of the present invention.

## Claims

1. A novel OLAP pre-calculation model, comprising:
a query statement statistical analyzer;
a dynamic dimension combination generator; and
a pre-calculation result usage monitor,
wherein, the query statement statistical analyzer is configured to receive a query statement input and perform statistical analysis on the query statement; and to judge whether a pre-calculation dimension combination matching the query statement exists among pre-stored pre-calculation dimension combinations according to the statistical analysis result,
wherein the dynamic dimension combination generator is configured to generate an optimal dimension combination corresponding to the query statement and an optimal combination sequence corresponding to the optimal dimension combination, generate a pre-calculation dimension combination matching the query statement according to the optimal dimension combination and the optimal combination sequence, and store the matching pre-calculation dimension combination, if no matching pre-calculation dimension combination exists,
wherein the query statement statistical analyzer is further configured to perform a pre-calculation query according to the matching pre-calculation dimension combination to obtain a desired query result, and
wherein the pre-calculation result usage monitor is configured to monitor all pre-calculation dimension combinations generated by the dynamic dimension combination generator, ascertain the frequency of use of a pre-calculation result corresponding to each pre-calculation dimension combination within a preset time period, and, if the frequency of use of the pre-calculation result is lower than a preset threshold, delete the pre-calculation result corresponding to the pre-calculation dimension combination.

2. The OLAP pre-calculation model according to claim 1, wherein the query statement statistical analyzer is further configured to select a second optimal pre-calculation dimension combination among the pre-stored pre-calculation dimension combinations, if no pre-calculation dimension combination matching the query statement exists among the pre-stored pre-calculation dimension combinations, and further comprising the steps of:
performing a pre-calculation query to obtain a second optimal query result according to the second optimal pre-calculation dimension combination; and
performing aggregation operation of the second optimal query result to obtain the desired query result.

3. The OLAP pre-calculation model according to claim 1 or 2, wherein, the query statement statistical analyzer is specifically configured to receive a query statement input, and perform statistical analysis on data tables, dimensions, measurements, and filter conditions used in the query statement.

4. The OLAP pre-calculation model according to claim 3, wherein, the query statement statistical analyzer is further configured to read data corresponding to the query statement directly from source data, if neither a matching pre-calculation dimension combination nor a second optimal pre-calculation dimension combination exists among the pre-stored pre-calculation dimension combinations, and further comprising the step of;
performing aggregation calculation and filtering of the data read from the source data to obtain the desired query result.

5. A method for generating a pre-calculation result, the method comprising the steps of:
utilizing the OLAP pre-calculation model according to any of claims 1-4,
receiving a query statement input, and performing statistical analysis on the query statement;
judging whether a pre-calculation dimension combination matching the query statement exists among pre-stored pre-calculation dimension combinations;
generating an optimal dimension combination corresponding to the query statement and an optimal combination sequence corresponding to the optimal dimension combination, generating a pre-calculation dimension combination matching the query statement according to the optimal dimension combination and the optimal combination sequence, and storing the matching pre-calculation dimension combination, if no matching pre-calculation dimension combination exists;
performing a pre-calculation query to obtain a desired query result according to the matching pre-calculation dimension combination; and
monitoring all generated pre-calculation dimension combinations, ascertaining the frequency of use of a pre-calculation result corresponding to each pre-calculation dimension combination within a preset time period, and, if the frequency of use is lower than a preset threshold, deleting the pre-calculation result corresponding to the pre-calculation dimension combination.

6. The method according to claim 5, wherein, the step of judging whether a pre-calculation dimension combination matching the query statement exists among pre-stored pre-calculation dimension combinations according to the statistical analysis result further comprises the steps of:
selecting a second optimal pre-calculation dimension combination among the pre-stored pre-calculation dimension combinations, if no pre-calculation dimension combination matching the query statement exists among the pre-stored pre-calculation dimension combinations;
performing a pre-calculation query to obtain a second optimal query result according to the second optimal pre-calculation dimension combination; and
performing aggregation operation of the second optimal query result to obtain the desired query result.

7. The method according to claim 6, wherein, the step of receiving a query statement input and performing statistical analysis on the query statement comprises the steps of:
receiving the query statement input, and performing statistical analysis on data tables, dimensions, measurements, and filter conditions used in the query statement.

8. The method according to claim 7, wherein, the step of judging whether a pre-calculation dimension combination matching the query statement exists among pre-stored pre-calculation dimension combinations according to the statistical analysis result further comprises the steps of:
reading data corresponding to the query statement directly from the source data, if neither a pre-calculation dimension combination matching the query statement nor a second optimal pre-calculation dimension combination exists among the pre-stored pre-calculation dimension combinations; and
performing aggregation calculation and filtering of the data read from the source data to obtain the desired query result.
